# EUROPEAN PATENT APPLICATION

(11) **EP 1 056 283 A1**
(43) Date of publication of application: **29.11.2000**
(21) Application number: 99900313.0
(22) Date of filing: 14.01.1999
(51) Int. Cl.: H04N 5/445, H04N 5/44, H04N 7/08

(54) **PROGRAM SELECTING DEVICE AND PROGRAM SELECTING METHOD**

(30) Priority: 16.01.1998 JP 666598
(71) Applicant: Matsushita Electric Industrial Co., Ltd., Kadoma-shi, Osaka 571-8501 (JP)
(72) Inventor: OKABE, Koji, Neyagawa-shi, Osaka 572-0037 (JP)
(74) Representative: Lang, Johannes, Dipl.-Ing.
(86) International application number: JP9900104
(87) International publication number: WO9937090

(57) **Abstract**

An object of the present invention is to provide, in the case that a user has the watching time in mind in advance, a television receiver capable of swiftly carrying out program selection by utilizing an EPG. In order to achieve this object, an EPG information extraction part 111 extracts EPG information from a video signal. An EPG information storage part 112 stores the EPG information. To an calculation control part 114, a remote controller operation signal for specifying a watching time is inputted. The calculation control part 114 then selects information about the program relevant to the watching time from the EPG information, and then generates a program schedule.

## Description

### TECHNICAL FIELD

The present invention relates to program selection apparatuses, and more specifically to a program selection apparatus that is connected to a television set (e.g., including a television receiver (so-called television exemplarily having a tuner and a display incorporated), a tuner to be connected to a television and a monitor, or a VCR or personal computer having a tuner incorporated), and is used for program selection utilizing an electronic program guide.

### BACKGROUND ART

An Electronic Program Guide (hereinafter, EPG) is a service of providing a user with EPG information from a broadcast station, and displaying a program schedule for program selection, on a display of a television receiver, for example. The EPG has been adopted mainly in CATV or CS broadcast, and the television receiver utilizing the EPG has been available on the market.

The EPG information includes program start/end time, genre, plot, cast, or the like, and is exemplarily superimposed on a vertical blanking interval of a video signal or (if in digital CATV or CS broadcast) included in an MPEG2 transport stream for transmission. The television receiver applying the EPG extracts the EPG information from the video signal or the stream, and then generates a program schedule, and the like, for display on a screen. A user refers to the program schedule displayed on the screen, or the like, to select which program to watch.

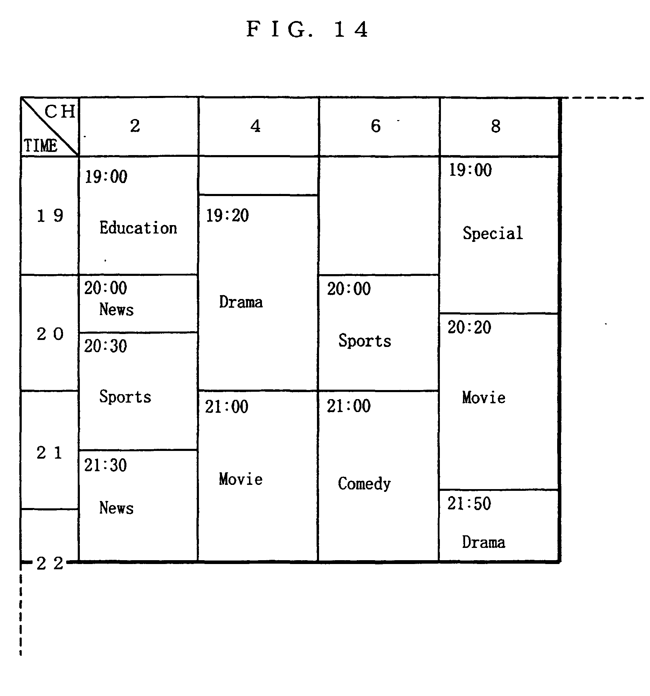

The television receiver can determine what type of program schedule is to be generated from the received EPG information. Accordingly, the program schedule to be displayed may vary with details according to the receivers, but is often in such style (comprehensive program schedule) as shown in FIG. 14.

Depicted in FIG. 14 is an exemplary program schedule displayed by a conventional television receiver utilizing the EPG. In FIG. 14, information about a plurality of programs (programs subsequent to the program currently on the air) in the program schedule is two-dimensionally arranged, in which a lateral axis indicates a channel and a longitudinal a broadcast time.

Due to restrictions on the screen size, the program schedule includes only index-like information such as program start/end time, and genre. The screen of the television receiver is not sufficient to accommodate even such program schedule having only index-like information. Thus, a part (denoted by a solid line in the drawing) thereof is once displayed, and when a cursor comes to the end of the screen, the screen is scrolled (through).

Once the user selects a program out of the program schedule with cursor keys, an enter key, and the like, provided on a remote controller, another screen is called up and then information detailed in plot or cast of the program is displayed. The user then determines whether or not to watch the program by referring to the displayed information. If the user determines to watch the program, he/she again operates the cursor keys, or the like, to instruct display or to preset the program. If not, the user calls up to return the screen of the program schedule and selects another program therefrom.

Herein, at the time of program selection, the user often has the time or the time range for watching programs already in mind.

If this is the case, in the above conventional television receiver, the user first longitudinally moves the cursor on such program schedule as shown in FIG. 14 displayed on the screen, with the cursor keys, or the like, from the current time to the watching time. Thereafter, the user laterally moves the cursor for program selection. In this manner, if a time difference between the current time and the watching time is large as is a case where a program at night is preset in the morning, it takes time to scroll through the screen. As a result, program selection cannot be swiftly done.

Further, after scrolled, the screen is mostly occupied by unnecessary information about the programs not scheduled at the watching time, and information about the programs at the watching time is left limited on the screen (e.g., information equivalent only to a few channels). Especially when the number of channels is large (may reach some tens to hundreds of channels in CATV or CS broadcast), the usability thereof is poor. As a result, program selection cannot be swiftly done.

Therefore, an object of the present invention is to provide a program selection apparatus to be connected to a television set, and is capable of swift program selection utilizing the EPG in the case that a user has the time (or the time range) for program watching already in mind.

### DISCLOSURE OF THE INVENTION

The present invention has the following features to attain the object above.

A first aspect of the present invention is directed to a program selection apparatus for selecting a program utilizing an EPG (Electronic Program Guide), the apparatus comprising:
means for extracting EPG information from a video signal;
means for storing the EPG information;
means for specifying a watching time; and
means for selecting information about a program relevant to the watching time from the EPG information, and generating a program schedule.

As described above, in the first aspect, the watching time is specified so that a program schedule having only information about programs relevant to the watching time, e.g., programs to be on the air at the watching time is displayed. Therefore, there is no more need to scroll the screen and thus the time taken therefor is saved. Further, information in need for the watching time becomes available at a glance. In this manner, if the user has the watching time already in mind, program selection can be swiftly done by utilizing the EPG. Further, the screen is freed from unnecessary information about programs not scheduled at the specified watching time, whereby the screen can be efficiently utilized.

According to a second aspect, in the first aspect,
the means for specifying the watching time
regards time specifying information for specifying the watching time as a current time, and
changes the time specifying information from the current time to the watching time.

As described above, in the second aspect, compared with the case that the user directly inputs the watching time exemplarily with the ten keys provided on the remote controller, the time specification can be done only with the user's operation on the cursor keys. As a result, the time taken for time specification can be reduced, and program selection can be accordingly swiftly done.

According to a third aspect, in the second aspect, to change the time specifying information from the current time to the watching time, the means for specifying the watching time uses any one speed among a plurality of predetermined speed.

As described above, in the third aspect, with the speed for changing the time specifying information increased, the time taken therefor can be shorter, and with decreased, fine adjustments for the time specifying information can be easily done. As a result, the time taken for time specification can be reduced.

According to a fourth aspect, in the second aspect, to change the time specifying information from the current time to the watching time, the means for specifying the watching time first uses any one speed among a plurality of predetermined speed, and then starts to use any other speed thereamong at some point during the change.

As described above, in the fourth aspect, the speed may be set slower at the beginning so that the user can easily make fine adjustments, and then at some point during the change, the speed may be set faster so that the time taken to change the time specifying information can be reduced. Further, the speed is automatically changed, whereby there is no need to set the speed. Therefore, the time taken to change the time specifying information can be reduced.

According to a fifth aspect, in the first aspect,
the means for specifying the watching time
regards time specifying information for specifying the watching time as a current time, and
changes, according to a broadcast start time for every program included in the EPG information, the time specifying information from the current time to the watching time.

As described above, in the fifth aspect, the time taken to change the time specifying information can be reduced, and further, the time specifying information stops at the exact broadcast start time. Therefore, the user has no need to make fine adjustments therefor. In this manner, the time taken to change the time specifying information can be minimum, and program selection can be accordingly swiftly done.

A sixth aspect of the present invention is directed to a television receiver utilizing an EPG (Electrical Program Guide) comprising:
means for extracting EPG information from a video signal;
means for storing the EPG information;
means for specifying a watching time;
means for selecting information about a program relevant to the watching time from the EPG information, and then generating a program schedule;
means for displaying the program schedule; and
means for referring the program schedule for program selection.

A seventh aspect of the present invention is directed to a program selection method for selecting a program utilizing an EPG (Electronic Program Guide), the method comprising the steps of:
extracting EPG information from a video signal;
storing the EPG information;
specifying a watching time; and
selecting information about a program relevant to the watching time from the EPG information, and then generating a program schedule.

According to an eighth aspect, in the seventh aspect,
the step of specifying the watching time comprises the steps of:
regarding time specifying information for specifying the watching time as a current time; and
changing the time specifying information from the current time to the watching time.

According to a ninth aspect, in the eighth aspect, in the step of changing the time specifying information from the current time to the watching time, any one speed is used among a plurality of predetermined speed.

According to a tenth aspect, in the eighth aspect, in the step of changing the time specifying information from the current time to the watching time, any one speed among a plurality of predetermined speed is first used, and then any other speed thereamong is started to use at some point during the change.

According to an eleventh aspect, in the seventh aspect,
the step of specifying the watching time comprises the steps of:
regarding time specifying information for specifying the watching time as a current time; and
changing, according to a broadcast start time for every program included in the EPG information, the time specifying information from the current time to the watching time.

A twelfth aspect of the present invention is directed to a recording medium being stored a program for selecting a TV program utilizing an EPG (Electrical Program Guide) to be executed on a computer device, the program being for realizing an operational environment comprising the steps of:
extracting EPG information from a video signal:
storing the EPG information;
specifying a time for TV program watching; and
selecting information about a TV program relevant to the watching time from the EPG information, and generating a program schedule.

A thirteenth aspect of the present invention is directed to a method for supplying a program, over a communications circuit, for selecting a TV program utilizing an EPG (Electrical Program Guide) to be executed on a computer device, the program being for realizing an operational environment comprising the steps of:
extracting EPG information from a video signal:
storing the EPG information;
specifying a time for TV program watching; and
selecting information about a TV program relevant to the time for TV program watching from the EPG information.

### BRIEF DESCRIPTION OF THE DRAWINGS

FIG. 1 is a block diagram showing the structure of a main part of a television receiver according to a first embodiment of the present invention.
FIG. 2 is a schematic diagram showing main keys provided on a remote controller 2 shown in FIG. 1.
FIG. 3 is a diagram exemplarily showing an EPG screen to be displayed on a display 12 in FIG. 1.
FIG. 4 is a diagram for explaining a user's procedure of program selection by referring to the EPG screen ((a) corresponds to the EPG screen in FIG. 3) displayed on the display 12 in FIG. 1.
FIG. 5 is a flowchart showing how an calculation control part 114 (first embodiment) in FIG. 1 takes out, from an EPG information storage part 112, information about programs on the air at the watching time.
FIG. 6 is a diagram exemplarily showing a menu screen to be displayed on the display 12 in FIG. 1.
FIG. 7 is a diagram exemplarily showing an EPG time specification speed mode setting screen to be displayed on the display 12 in FIG. 1.
FIG. 8 is a schematic diagram showing how the time specifying information on the EPG screen is changed in a television receiver (structure of which is similar to FIG. 1) according to a second embodiment of the present invention by way of comparison between high-speed mode and low-speed mode.
FIG. 9 is a flowchart showing how the calculation control part 114 (second embodiment) in FIG. 1 carries out time specifying operation, that is, how the calculation control part 114 changes the time specifying information according to the user's operation on the remote controller.
FIG. 10 is a schematic diagram showing how the time specifying information on the EPG screen is changed in a television receiver (structure of which is similar to FIG. 1) according to a third embodiment of the present invention.
FIG. 11 is a flowchart showing how the calculation control part 114 (third embodiment) in FIG. 1 carries out time specifying operation, that is, how the calculation control part 114 changes the time specifying information according to the user's operation on the remote controller.
FIG. 12 is a schematic diagram showing how the time specifying information on the EPG screen is changed in a television receiver (structure of which is similar to FIG. 1) according to a fourth embodiment of the present invention.
FIG. 13 is a flowchart showing how the calculation control part 114 (fourth embodiment) in FIG. 1 carries out time specifying operation, that is, how the calculation control part 114 changes the time specifying information according to the user's operation on the remote controller.
FIG. 14 is a diagram showing an exemplary program schedule (comprehensive program schedule) to be displayed on a conventional television receiver utilizing the EPG.

### BEST MODE FOR CARRYING OUT THE INVENTION

The embodiments of the present invention are described below with reference to the accompanying drawings.

### (First Embodiment)

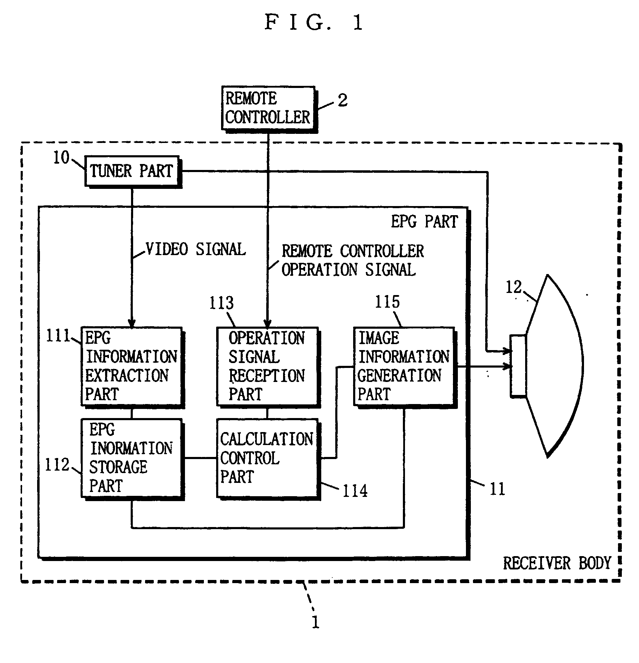

FIG. 1 is a block diagram showing the structure of a main part of a television receiver according to a first embodiment of the present invention. In FIG. 1, the television receiver of the first embodiment is structured by a receiver body 1 and a remote controller 2. The receiver body 1 is provided with a tuner part 10, an EPG part 11, and a display 12. The EPG part 11 includes an EPG information extraction part 111, an EPG information storage part 112, an operation signal reception part 113, a calculation control part 114, and an image information generation part 115.

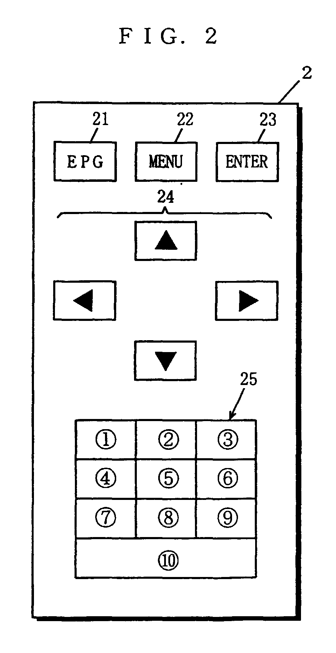

FIG. 2 is a schematic diagram showing main keys provided on the remote controller 2 in FIG. 1. In FIG. 2, the remote controller 2 is provided with an EPG key 21, a menu key 22, an enter key 23, cursor (up, down, left, and right) keys 24, and ten keys (1 to 10) 25.

Herein, EPG (Electronic Program Guide) information is superimposed on a vertical blanking interval of a video signal (if in digital CATV or CS broadcast) or included in an MPEG2 transport stream for transmission from a broadcast station.

In the television receiver of the first embodiment, the tuner part 10 receives the signal or the stream from the broadcast station, and the display 12 outputs the video signal provided by the tuner part 10 in a form of visible radiation. The EPG part 11 is provided with a function of extracting the EPG information from the video signal and generating a program schedule, and the like, and then displaying the schedule on the display 12.

The user refers to the program schedule, and the like, displayed on the display 12 so as to select which program to watch. The selection is made by operating the ten keys 25, the cursor keys 24, or the enter key 23 on the remote controller 2.

In the EPG part 11, the EPG information extraction part 111 extracts the EPG information from the video signal. The EPG information storage part 112 stores the EPG information. The operation signal reception part 113 receives an operation signal (herein, remote controller operation signal) indicating the user's operation on the remote controller (or operation on a main panel, which is not shown). The calculation control part 114 includes a CPU and program memory being not shown, and the CPU operates following to program data stored in the program memory. In this manner, the calculation control part 114 generates time specifying information (later described) based on the remote controller operation signal, and the program schedule, the detailed program information, and the like, based on the EPG information. The calculation control part 114 also controls the image information control part 115. The image information generation part 115 generates image information to be provided to the display 12 according to the time specifying information, the program schedule, the detailed program information, and the like.

It is now described the operation of such television receiver of the first embodiment next below. Herein, the basic operations of such television receiver including video signal display, and channel selection or preset in response to the user's operation on the remote controller are conventionally the same and popularly known, and thus are not described herein. Further, the basic operations required for the television receiver utilizing the EPG such as extracting the EPG information from the video signal, generating and displaying the program schedule and the detailed program information, and the like, are conventionally the same, and are briefly described.

In FIG. 1, when the television receiver is turned on, first, the EPG information extraction part 111 extracts the EPG information from the received video signal. The EPG information storage part 112 stores the extracted EPG information. Such operation of extracting and storing the EPG information is done from then and onward as required.

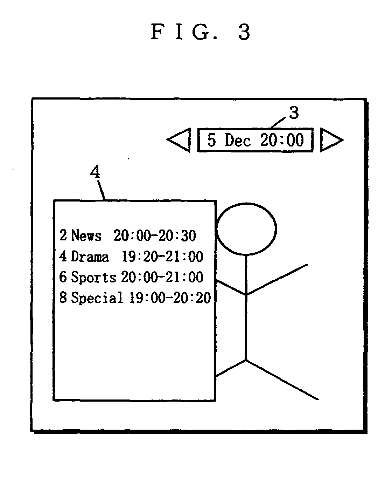

After the receiver is turned on, the user presses the EPG key 21 on the remote controller 2 so as to call up an EPG screen. In response thereto, the remote controller 2 transmits the remote controller operation signal to the receiver body 1, and therein, the operation signal reception part 113 receives the remote controller operation signal. The calculation control part 114 has the image information generation part 115 generate image information for the EPG screen. The generated image information is provided to the display 12, and thereby, the display 12 displays such EPG screen as shown in FIG. 3.

Depicted in FIG. 3 is an exemplary EPG screen displayed on the display 12 in the television receiver of the first embodiment. In FIG. 3, the EPG screen shows a window 3 for the time specifying information and a window 4 for the program schedule both superposed on an image of a given program (e.g., a promotion program or a program watched immediately before the receiver is turned off). The time specifying information displayed on the window 3 includes day, month, and time (hour, minute), while the program schedule displayed on the window 4 includes index-like information (herein, broadcast channel, genre, and program start/end time) relevant to programs to be on the air at the time indicated by the time specifying information.

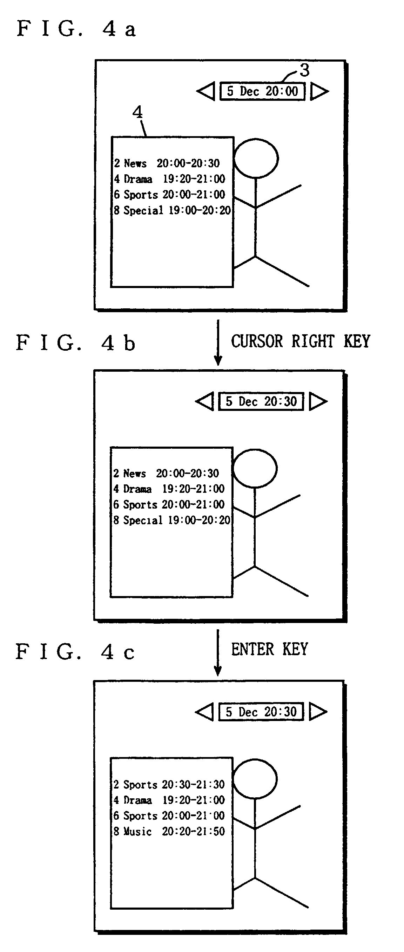

To be specific, when the user specifies the watching time, the EPG screen displays the time specifying information and the program schedule having only the programs (index-like information thereof) to be on the air at the specified watching time. This is the difference from the conventional operation, and thus is described in detail by referring to FIG. 4.

Assuming that now is 20:00 on December 5, and the user is in a mood for some program 30 minutes later, from 20:30, and he/she calls up the EPG screen for program selection and preset. In such case, the EPG screen displayed on the display 12 is changed responding to the user's operation on the remote controller as FIG. 4(a)→(b)→(c).

In detail, the user first presses the EPG key 21. In response thereto, the remote controller 2 transmits the remote controller operation signal to the receiver body 1, and thus display of the EPG screen is started. The screen automatically displays the time specifying information initially indicating the current time (5, Dec. 20:00), and the program schedule as of the point in time (FIG. 4(a)).

Next, the user presses the cursor right key 24. In response thereto, the remote controller 2 transmits the remote controller operation signal to the receiver body 1, and thus the time specifying information on the EPG screen is advanced by a minute. If the user keeps pushing the cursor right key 24, the time specifying information is advanced at a given speed. For example, while the user keeps pushing the cursor right key 24, with the lapse of actual time of 0.1 second (actual unit time; later described), the time specifying information displayed on the EPG screen is advanced by a minute (time specifying unit time; later described). With the cursor right key 24 kept being pushed (continuously pushed) by the user, the time specifying information on the EPG screen is changed from the current time to the watching time (5, Dec. 20:30) (FIG. 4(b)). When the time specifying information becomes the watching time, the user releases the cursor right key 24.

To set-backward the time specifying information, the cursor left key 24 is pressed.

Next, the user presses the enter key 23. In response thereto, the remote controller 2 transmits the remote controller operation signal to the receiver body 1, and thus the EPG screen displays, instead of the program schedule as of the point in time, a program schedule for the watching time, that is, a program schedule having only information about the programs to be on the air at 20:30 on December 5 (programs to be started at the time included but not those ended (FIG. 4(c)).

As is known from above, the user first specifies the watching time, and thus the EPG screen displays a program schedule having only programs (index-like information thereof) to be on the air at the specified watching time. Therefore, program selection can be swiftly started without scrolling the EPG screen. Further, the program selection can be easily and swiftly done with only required programs displayed.

Note that, it is later described how the calculation control part 114 takes out, from the EPG information storage part 112, the information about the programs to be on the air at the watching time.

Next, the user refers to the displayed program schedule, selects one program, and then calls up for detailed information about the selected program. Specifically, the user moves the cursor on the program schedule in accord with the cursor up or down key 24, and with the enter key 23, the detailed information about the program indicated by the cursor is displayed.

Thereafter, the user refers to the displayed detailed information so as to determine whether or not to watch the program. If determined yes, he/she presses the enter key 23. If determined no, he/she presses the EPG key 21 to call up the program schedule again, and select another program. With the enter key 23 pressed, the selected program is preset in the receiver body 1.

When the start time for the program preset as above comes, the television receiver is automatically turned on or channel change is done therein to display the program.

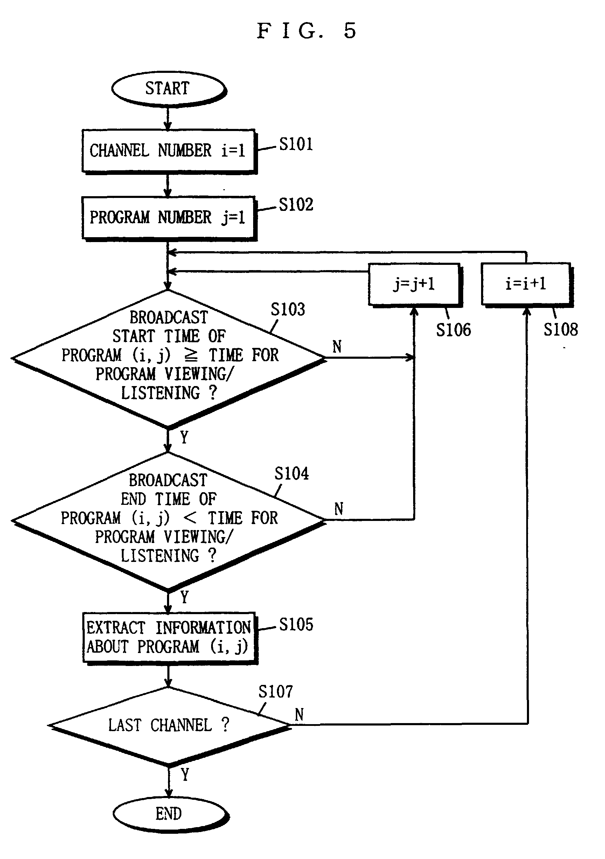

Herein, by referring to the flowchart in FIG. 5, it is now described how the calculation control part 114 takes out, from the EPG information storage part 112, the information about the program on the air at the watching time.

The calculation control part 114 previously provides a serial number *i* (1, 2, ...) to every possible channel for watching. The calculation control part 114 also provides a serial number *j* (1, 2, ...) to every channel whose information is stored in the EPG information storage part 112. In other words, the calculation control part 114 distinguishes among the programs and information thereabout stored in the EPG information storage part 112 by (*i*, *j*).

In FIG. 5, the calculation control part 114 first regards *i* = 1 (step S101), and then *j* = 1 (step S102). Then, the calculation control part 114 refers to the contents in the EPG information storage part 112 so as to determine whether or not the start time of the program (*i*, *j*) (herein, program (1, 1)) is equal to or larger in number than the specified watching time (it means, at the same time or later) (step S103). If the determination is no, the procedure goes to step S106.

If the determination in step S103 is yes, the calculation control part 114 then determines whether or not the end time of the program (*i*, *j*) is smaller in number than the specified watching time (it means, earlier) (step S104). If the determination is no, the procedure goes to step S106.

If the determination in step S104 is yes, the calculation control part 114 takes out the information about the program (*i*, *j*) from the EPG information storage part 112 (step S105).

In step S106, the calculation control part 114 increments j, that is, regards as *j* = *j* + 1 (herein *j* = 2), and the procedure returns to step S103.

Next, the calculation control part 114 determines whether or not the current channel is the last (step S107). If the determination is no, the calculation control part 114 increments *i*, that is, regards as *i* = *i* + 1 (herein *i* = 2) (step S108), and then the procedure returns to step S103.

In this manner, the procedure from steps S103 to S105 are repeated while *i* and *j* are both incremented, and accordingly, the programs to be on the air at the watching time in channels 1, 2, 3, ... are sequentially taken out from the EPG information storage part 112.

When the determination in step S107 becomes yes, the calculation control part 114 ends its operation.

As described above, according to the first embodiment, the user specifies the watching time, and thus the EPG screen displays a program schedule having only information about programs to be on the air at the specified watching time. Therefore, compared with the case that a comprehensive program schedule is displayed, there is no more need to scroll the screen and thus the time taken therefor is saved. Further, the user can have information in need for the watching time at a glance. In this manner, if the user has the watching time already in mind, program selection can be swiftly done by utilizing the EPG. Further, the screen is freed from unnecessary information about programs not scheduled at the specified watching time, whereby the screen can be efficiently utilized.

Note that, the program schedule shown in this embodiment indicates only programs (specifically, one program for each channel) to be on the air at the user's specified watching time. However, another style of program schedule may indicate only programs to be on the air at the watching time and programs each subsequent thereto (i.e., two programs for each channel), or another style of program schedule may indicate only programs to be on the air for a given time (e.g., one hour) from the watching time (that is, programs to be on the air at the watching time, and programs to be started within the given time).

Alternatively, the user may additionally specify a genre, and accordingly the number of programs to be appeared on the program schedule may be reduced by skipping programs not applicable to the specified genre (this may be useful for swift program selection especially in CS broadcast, or the like, having some hundreds of channels).

The program schedule can be easily varied in style based on this embodiment.

Still further, the program schedule herein is in the style having information about the programs vertically arranged in one column (see FIG. 3). However, as long as the information in need for the watching time is available at a glance, any style will do, for example, vertically arranged in a plurality of columns.

Alternatively, as to such program schedule (comprehensive program schedule) as shown in FIG. 14 that the information about the programs is two-dimensionally arranged with a lateral axis indicating a channel and a longitudinal axis a broadcast time, only a part for the watching time may be indicated. In detail, the user specifies the watching time, and in response thereto, the EPG screen immediately partially displays the comprehensive program schedule for the watching time. Also in this case, there is no more need to vertically scroll the screen, and thus the time taken therefor can be saved.

Still further, in this embodiment, in order to specify the watching time, the EPG screen first indicating the current time is called up, and then the time specifying information is changed from the current time to the watching time by the user's operation on the cursor keys. However, the time may be specified with the ten keys 25 (for channel selection) on the remote controller 2. In this case, however, the key operation is rather bothersome, and resultantly it may takes longer for program selection.

Still further, in this embodiment, in response to the cursor keys 24 being continuously pushed, the time specifying information is changed from the current time to the watching time at a given speed. By increasing the speed for changing the time specifying information, the time taken to change the time specifying information from the current time to the watching time can be shorter, and by decreasing, the user can easily make fine adjustments for the time specifying information. Accordingly, it is preferable to set the speed for changing the time specifying information with consideration for the time taken to obtain the watching time and the difficulty for the fine adjustments.

Still further, the speed for changing the time specifying information is determined by the actual unit time indicating an actual time interval for the processing of changing the time specifying information, and the time specifying unit time indicating a unit time for changing the time specifying information. In this embodiment, a rate of change {10 minutes}/second is obtained with the actual unit time of 0.1 second and the time specifying unit time of 1 minute. Herein, the rate of change {10 minutes}/second is achievable with the actual unit time of 0.2 second and the time specifying unit time of 2 minutes, or the actual unit time of 0.5 second and the time specifying unit time of 5 minutes.

Herein, in second and third embodiments described below, disclosed is a television receiver of a type taking less to obtain the watching time than the one in the first embodiment, and further facilitating fine adjustments by the user.

### (Second Embodiment)

A television receiver according to the second embodiment of the present invention is similarly structured to the television receiver of the first embodiment, and similarly operates thereto except the operation of changing the time specifying information displayed on the EPG screen responding to the user's operation on the cursor keys. Therefore, as to the television receiver of the second embodiment, the structure and the operation similar to the one in the first embodiment are not described again, and only the operation that differs therefrom is described by referring to FIGS. 1 to 5 as appropriate.

In FIG. 1, the television receiver of the second embodiment sets, in advance, the speed for changing the time specifying information in a plurality of levels according to the user's specification. In this example, the number of levels is two, and one level which changes the time specifying information at a relatively slower speed is referred to as a low-speed mode, and the other at a higher speed as a high-speed mode.

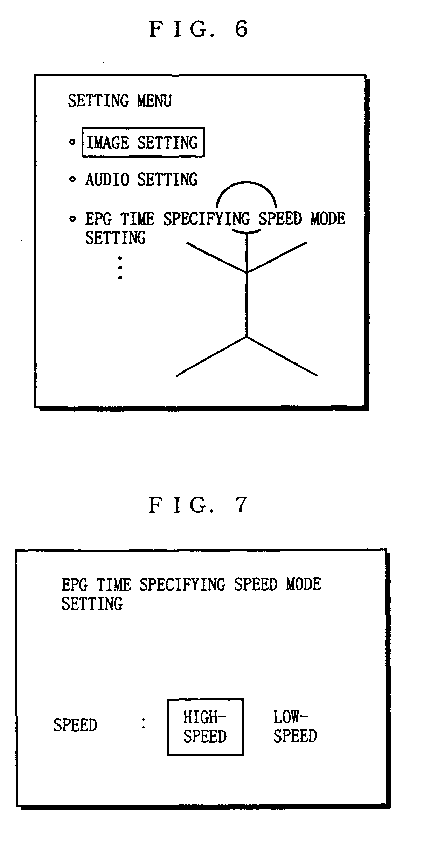

Prior to call up the EPG screen, the user presses the menu key 22 on the remote controller 2 so as to call up a menu screen. In response thereto, the remote controller 2 transmits the remote operation signal to the receiver body 1, and then the display 12 displays such menu screen as exemplarily shown in FIG. 6.

Next, the user operates the cursor keys 24 on the remote controller 2, and then on the displayed menu screen, specifies an item "EPG time specifying speed mode setting". Thereafter, the user presses the enter key 23. In response thereto, the display 12 displays the EPG time specifying speed mode setting screen as shown in FIG. 7.

Thereafter, with the cursor keys 24 on the remote controller 2, the user specifies either high-speed or low-speed displayed on the EPG time specifying speed mode setting screen, and then presses the enter key 23. In response thereto, in the receiver body 1, mode setting is made to the speed for changing the time specifying information.

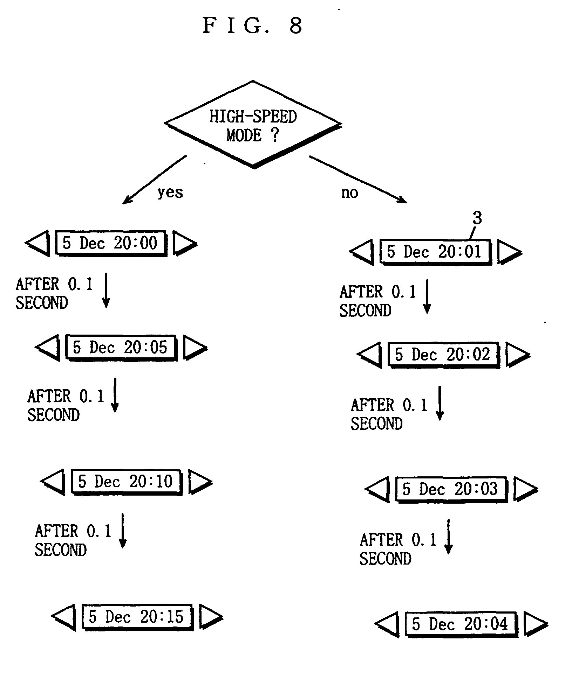

In the television receiver where such mode setting is made, in a similar manner to the first embodiment, the EPG screen is called up. Thereafter, with the cursor keys 24, the user specifies the watching time, and thus the EPG screen displays the program schedule having only the information about the programs before and after the programs to be on the air at the watching time. The only difference from the first embodiment lies on a respect that the previously-set EPG time specifying speed mode changes the speed for changing the time specifying information on the EPG screen. FIG. 8 shows a schematic diagram showing how the time specifying information on the EPG screen is changed in the television receiver of the second embodiment by way of comparison between high-speed and low-speed. In FIG. 8, at low-speed, with the lapse of actual time of 0.1 second, the time specifying information displayed on the EPG screen advances by a minute (rate of change {10 minutes}/second), and at high-speed, with the lapse of actual time of 0.1 second, the time specifying information advances by 5 minutes (rate of change {50 minutes}/second).

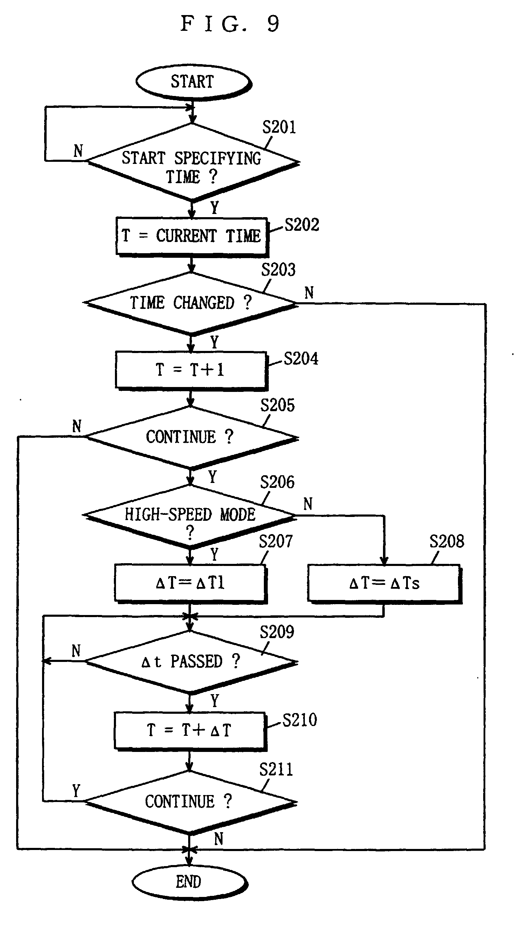

Herein, by referring to the flowchart in FIG. 9, it is described how the calculation control part 114 carries out time specifying operation, that is, how the calculation control part 114 changes the time specifying information according to the user's operation on the remote controller.

In FIG. 9, the calculation control part 114 first determines whether or not the remote controller operation signal is provided for time specification (herein, whether or not the EPG key 21 is pressed) (step S201). If the determination is no, the calculation control part waits for the determination to be yes.

If the determination in step S201 is yes, the calculation control part 114 regards the time specifying information (denoted by T in the drawing) as the current time (step S202), and then determines whether or not the remote controller operation signal is provided so as to change the time specifying information (herein, whether or not the cursor right key 24 is pressed) (step S203). If the determination is no, the calculation control part 114 ends its time specifying operation.

If the determination in step S203 is yes, the calculation control part 114 advances the time specifying information by a minute (step S204), and then determines whether or not the remote controller operation signal is provided so as to continue the time specifying operation (herein, whether or not the cursor right key 24 is kept being pushed) (step S205). Thereafter, the calculation control part 114 determines whether or not the time specifying speed mode in current use is high-speed (step S206), and if yes, sets the time specifying unit time (ΔT) to ΔT1(0<ΔT1; herein, 5 minutes) (step S207).

If the determination in step S206 is no (low-speed mode), the time specifying unit time is set to Ts (0<Ts<t1; Herein 1 minute) (step S208).

Next, the calculation control part 114 advances the time specifying information by a minute in step S204, and then, determines whether or not the actual unit time (Δt; herein 0.1 second) has lapsed (step S209), and if no, waits for the determination to be yes.

If the determination in step S209 is yes, the calculation control part 114 changes (herein, advances) the time specifying information by the time specifying unit time (step S210), and then determines whether or not the remote controller operation signal is provided so as to continue the time specifying operation (herein, whether or not the cursor right key 24 is kept being pushed) (step S211). If the determination is no, the calculation control part 114 ends its time specifying operation.

If the determination in step S211 is yes, the procedure returns to step S209, and the calculation control part 114 repeats the same processing as above. Note that, in step S209, the calculation control part 114 determines whether or not the actual unit time has lapsed since the time specifying information was changed in step S210.

The procedure of steps S209 and S210 is repeated as long as the user keeps pushing the cursor right key 24, and when the user releases the cursor right key 24, the calculation control part 114 ends its time specifying operation.

As described above, according to the second embodiment, the speed for changing the time specifying information is set in advance in a plurality of levels according to the user's specification. Therefore, if the speed is set faster, the time taken for changing the time specifying information can be reduced, and if set slower, the user can easily make fine adjustments for the time specifying information. Therefore, the time taken for changing the time specifying information on the EPG screen can be reduced, and the user can easily make fine adjustments for the time specifying information, thereby rendering program selection swiftly done.

### (Third Embodiment)

A television receiver according to the third embodiment of the present invention is similarly structured to the television receiver of the first embodiment, and similarly operates thereto except the operation of changing the time specifying information displayed on the EPG screen according to the user's operation on the cursor keys. Therefore, as to the television receiver of the third embodiment, the structure and the operation similar to the one in the first embodiment are not described again, and only the operation differed therefrom is described by referring to FIGS. 1 to 5 as appropriate.

In the television receiver of the third embodiment, the time specifying information displayed on the EPG screen is changed according to any speed previously set in a plurality of levels, and at some point during the change, the speed is automatically changed to some other speed therein. In this example, the number of levels are two, and one level which changes the time specifying information at a relatively slower speed is referred to as a low-speed mode, and the other at a high speed is a high-speed mode.

In FIG. 1, in the television receiver of the third embodiment, the EPG screen is called up in a similar manner to the first embodiment. The user then operates the cursor keys 24 provided on the remote controller 2 for specifying the watching time. In response thereto, the EPG screen displays the program schedule having only the information about the program before and after the watching time. The only difference from the first embodiment lies on a respect that the speed for changing the time specifying information is changed at some point while the time specifying information being changed.

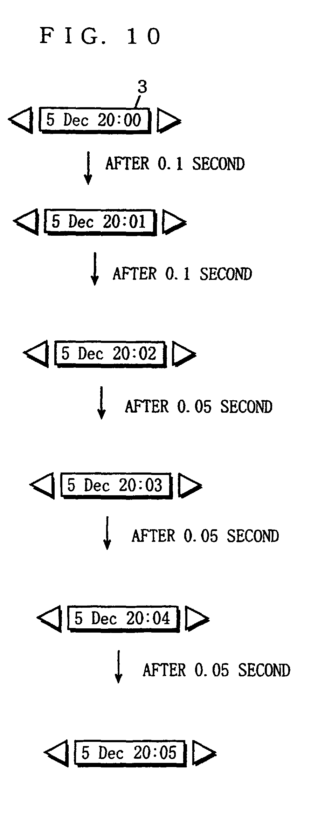

FIG. 10 is a schematic diagram showing how the time specifying information on the EPG screen changes in the television receiver of the third embodiment. In FIG. 10, with the lapse of the actual time of 0.1 second, the time specifying information displayed on the EPG screen first advances by a minute (low-speed mode), and the speed mode is changed at some point during the change (when the actual time lapsed 0.2 seconds), and from then and onward, the time specifying information advances by a minute with the lapse of the actual time of 0.05 second (high-speed mode). In detail, at the beginning of the operation of changing the time specifying information, the speed for changing the information is low, and after a given time since the start (herein, 0.2 second since the press on the cursor right key 24), the speed is automatically increased to be high.

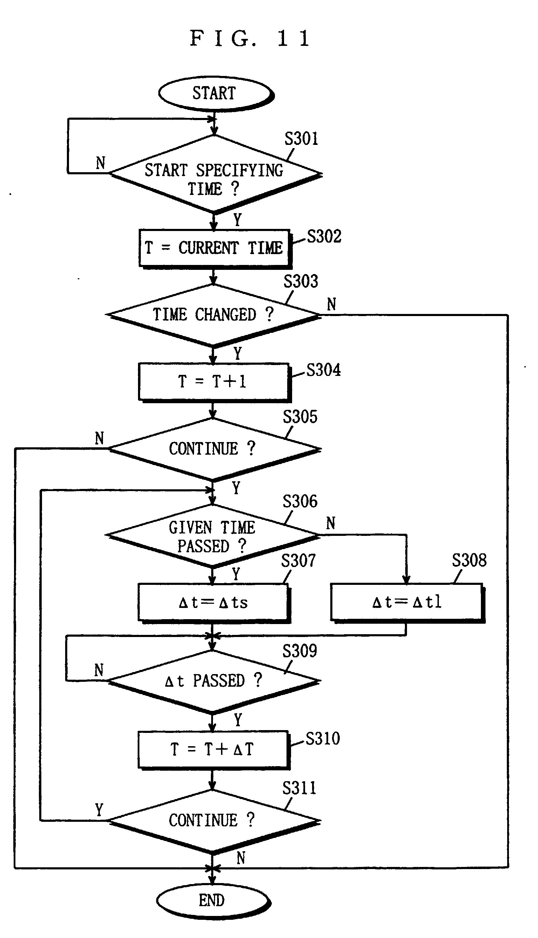

Herein, by referring to the flowchart in FIG. 11, it is described how the calculation control part 114 carries out time specifying operation, that is, how the calculation control part 114 changes the time specifying information according to the user's operation on the remote controller.

In FIG. 11, the calculation control part 114 first determines whether or not the remote controller operation signal is provided for time specification (herein, whether or not the EPG key 21 is pressed) (step S301). If the determination is no, the calculation control part 114 waits for the determination to be yes.

If the determination in step S301 is yes, the calculation control part 114 regards the time specifying information (denoted by T in the drawing) as the current time (step S302), and thereafter, determines whether or not the remote controller operation signal is provided so as to change the time specifying information (herein, whether or not the cursor right key 24 is pressed)(step S303). If the determination is no, the calculation control part ends its time specifying operation.

If the determination in step S303 is yes, the calculation control part 114 advances the time specifying information by a minute (step S304), and then determines whether or not the remote controller operation signal is provided so as to continue the time specifying operation (herein, whether or not the cursor right key 24 is kept being pushed) (step S305). Thereafter, the calculation control part 114 determines whether or not a given time (herein, 0.2 second) has lapsed since the time specifying information was advanced by a minute in step S304 (step S306), and if yes, sets the high-mode, i.e., the actual unit time (Δt) to Δts (o<Δts; herein 0.05 second) (step S307).

If the determination in step S306 is no, the calculation control part 114 sets the low-mode, i.e., the actual unit time to t1 (o<ts<t1; herein 0.1 second) (step S308).

Next, the calculation control part 114 determines whether or not the actual unit time (Δt) has lapsed since the time specifying information was advanced by a minute in step S304 (step S309), and if no, waits for the determination to be yes.

If the determination in step S309 is yes, the calculation control part 114 changes (herein, advances) the time specifying information by the time specifying unit time (ΔT; herein, a minute)(step S310), and then determines whether or not the remote controller operation signal is provided so as to continue the time specifying operation (herein, whether or not the cursor right key 24 is kept being pushed) (step S311). If the determination is no, the calculation control part 114 ends its time specifying operation.

If the determination in step S311 is yes, the procedure returns to step S306, and the calculation control part 114 repeats the same processing as above. Herein, in step S309 this time, the calculation control part 114 determines whether or not the actual unit time (Δt) has lapsed since the time specifying information was changed in step S310.

Then, as long as the user keeps pushing the cursor right key 24, the procedure of steps S306 to S310 are repeated, and when the user releases the cursor right key 24, the calculation control part 114 ends its time specifying operation.

In this manner, unless the above-described given time (herein, 0.2 seconds) lapsed since the user's press on the cursor right key 24, the time specifying information keeps advancing, in the low-speed mode, by a minute with the lapse of the actual time of 0.1 second (rate of change {10 minutes/second}). At the point in time when the given time lapsed, the low-speed mode is automatically changed to high-speed, and from then and onward, the time specifying information advances by a minute with the lapse of the actual time of 0.05 second (rate of change {20 minutes/second}).

As described above, according to the third embodiment, the time specifying information is first changed according to any speed previously set in a plurality of levels, and at some point during the change, the speed is automatically changed to some other speed therein. Therefore, it is possible to set the speed slower at the beginning to make the fine adjustments easily done, and increase the speed during the change to reduce the time taken to change the time specifying information. Further, as the speed is automatically changed, there is no more need to set the speed. In this manner, the time taken to change the time specifying information on the EPG screen is reduced. Further, the user can easily make fine adjustments therefor, and has no more need to change the speed. As a result, program selection can be swiftly done.

Herein, in the second embodiment, if the time specifying information is changed in the high-speed mode, some watching time (e.g., 20:03, 20:56) may require fine adjustments in low-speed mode. In the third embodiment, if stopped while being changed at high-speed, the time specifying information may stop at the time different from the watching time, and resultantly fine adjustments are required. Therefore, in a fourth embodiment below, disclosed is a television receiver of a type taking less to change the time specifying information to the watching time, and requiring no fine adjustment.

### (Fourth Embodiment)

A television receiver according to the fourth embodiment of the present invention is similarly structured to the television receiver of the first embodiment, and similarly operates thereto except the operation of changing the time specifying information displayed on the EPG screen responding to the user's operation on the cursor keys. Therefore, as to the television receiver of the fourth embodiment, the structure and the operation similar to the one in the first embodiment are not described again, and only the operation that differs therefrom is described by referring to FIGS. 1 to 5 as appropriate.

In FIG. 1, in the television receiver of the fourth embodiment, in a similar manner to the first embodiment, the EPG screen is called up. The user then operates the cursor keys 24 provided on the remote controller 2 for specifying the watching time. In response thereto, the EPG screen displays the program schedule having only the information about the program before and after the watching time. The only difference from the first embodiment lies on a respect that the time specifying information on the EPG screen is not changed on the basis of the predetermined time specifying unit time (with the lapse of the predetermined actual unit time) but is changed (advanced or retarded) according to the broadcast start time (or broadcast end time) of the programs, for example, from the current time to the broadcast start time of the next program, and then to the broadcast start time of the following program.

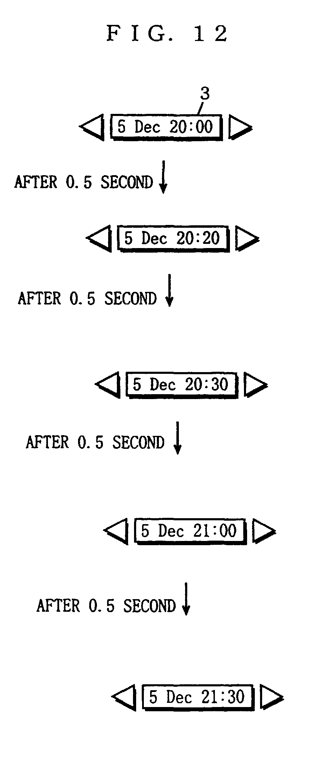

FIG. 12 is a schematic diagram showing how the time specifying information on the EPG screen is changed in the television receiver of the fourth embodiment. As is obvious from FIGS. 12 and 14 for comparison, the time specifying information on the EPG screen changes, assuming that the current time is 8:20 p.m. (20:00), every time the user presses the cursor right key 24 (with the lapse of the actual unit time (e.g., 0.5 second) if continuously pushed), the time is changed from 20:00 (see channel "8" in FIG. 14), 20:30 (see channel "2" therein), and to 21:10 (see channel "4" or "6" therein).

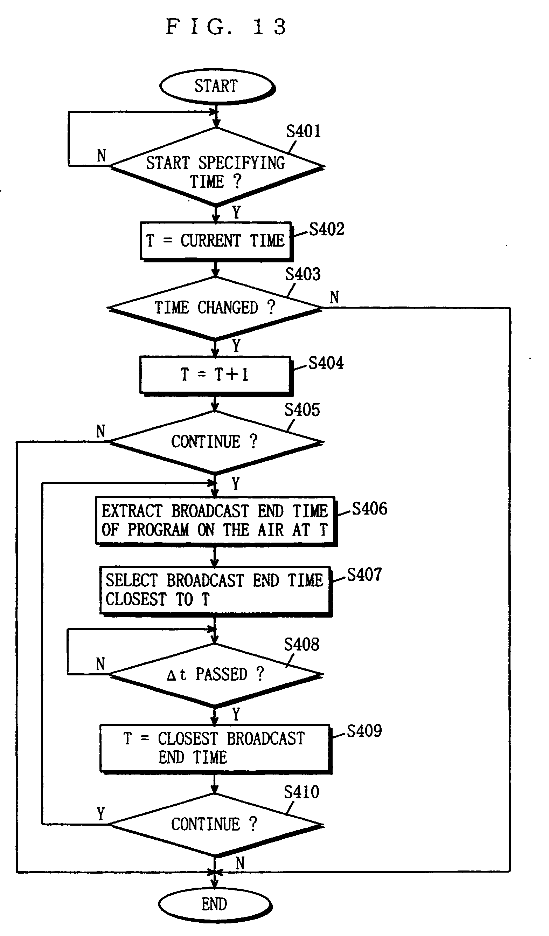

Herein, by referring to the flowchart in FIG. 13, it is described how the calculation control part 114 carries out time specifying operation, i.e., how the calculation control part 114 changes the time specifying information according to the user's operation on the remote controller.

Unlike the first embodiment, the calculation control part 114 herein does not change the time specifying information by the predetermined time specifying unit time (ΔT), but changes by the time specifying unit time varying on the basis of the EPG information.

In FIG. 13, the calculation control part 114 determines whether or not the remote controller operation signal is provided for time specification (herein, whether or not the EPG key 21 is pressed) (step S401). If the determination is no, the calculation control part 114 waits for the determination to be yes.

If the determination in step S401 is yes, the calculation control part 114 regards the time specifying information (denoted by T in the drawing) as the current time (step S402), and thereafter, determines whether or not the remote controller operation signal is provided so as to change the time specifying information (herein, whether or not the cursor right key 24 is pressed)(step S405). If the determination is no, the calculation control part 114 ends its time specifying operation.

If the determination in step S403 is yes, the calculation control part 114 advances the time specifying information by a minute (step S404), and then determines whether or not the remote controller operation signal is provided so as to continue the time specifying operation (herein, whether or not the cursor right key 24 is kept being pushed) (step S405). Then, the calculation control part 114 takes out, from the EPG information storage part 112, the broadcast end time for every program to be on the air at the watching time in a similar manner to the first embodiment described by referring to the flowchart in FIG. 5 (step S406). Thereafter, among the extracted broadcast end time (exemplarily by comparing the broadcast end time with one another), the calculation control part 114 takes out the broadcast end time closest to the time (herein, current time) indicated by the time specifying information (step S407).

Then, the calculation control part 114 determines whether or not the actual unit time (Δt; herein, 0.5 second) has lapsed since the time specifying information was advanced by a minute in step S404 (step S408),and if the determination is no, waits for the determination to be yes.

If the determination in step S408 is yes, the calculation control part 114 regards the time specifying information as the closest broadcast end time extracted in step S407 (step S409), and then determines whether or not the remote controller operation signal is provided so as to continue the time specifying operation (herein, whether or not the cursor right key 24 is kept being pushed) (step S410). Then, if the determination is no, the calculation control part 114 ends its time specifying operation.

If the determination in step S410 is yes, the procedure returns to step S406, and the calculation control part 114 repeats the same processing as above. Note that, in step S408 this time, the calculation control part 114 determines whether or not the actual unit time (Δt) has lapsed since the time specifying information was changed in step S409.

The procedure from S406 to S409 is repeated as long as the user keeps pushing the cursor right key 24, and when the user releases the cursor right key 24, the calculation control part 114 ends its time specifying operation.

In this manner, when the user presses the cursor right key 24, the EPG screen first displays the current time as the time specifying information, and then every time the user presses the cursor right key 24 (or while the user keeps pushing the cursor right key 24), the time specifying information is changed (advanced or retarded) according to the broadcast start time (or broad end time) of the programs, for example, from the current time to the broadcast start time of the program closest to the current time, and then to the broadcast start time of the program second closest thereto.

As described above, according to the fourth embodiment, the time taken to change the time specifying information on the EPG screen can be reduced, and the time specifying information can be stopped at the exact time of the broadcast start time. Therefore, the user has no more need to make fine adjustments therefor. As a result, program selection can be swiftly done.

### (Other Embodiments)

A first example is a program selection apparatus structured only by the EPG part 11 in FIG. 1. Such program selection apparatus is connected to a television receiver set including a television receiver, a TV tuner, a VCR having a tuner incorporated, a personal computer having a tuner incorporated, or the like, and the receiver set is so structured as to perform program selection utilizing the EPG. The operation thereof is similar to the one described in first to fourth embodiments.

A second example is a TV tuner utilizing the EPG information. Such TV tuner is exemplarily structured similarly to the television receiver shown in FIG. 1 without the display 12, and is connected to a television receiver, a monitor, or the like. The TV tuner displays, on the display 12 of the receiver, for example, the time specifying information or the program schedule similar to the one in the first to fourth embodiments.

A third example is a VCR having the above-described TV tuner incorporated.

A fourth example is a personal computer having the above-described TV tuner incorporated. In this case, at the time of shipment of the computer, program data is stored in program memory provided in the calculation control part 114. Other than that, the program data may be stored in the program memory in such manner as to read the program data stored in a recording medium (floppy disk, CD-ROM, or the like), and store the program data to the program memory. Alternatively, the program data transmitted over a communication circuit may be received and stored in the program memory.

### INDUSTRIAL APPLICABILITY

As described in the foregoing, the program selection apparatus of the present invention is connected to a television set (e.g., a television receiver, a tuner connected to a television or a monitor, or a VCR or a personal computer having a tuner incorporated), and is structured to swiftly perform program selection utilizing an Electronic Program Guide.

## Claims

1. A program selection apparatus for selecting a program utilizing an EPG (Electronic Program Guide), the apparatus comprising:
means for extracting EPG information from a video signal;
means for storing said EPG information;
means for specifying a watching time; and
means for selecting information about a program relevant to said watching time from said EPG information, and generating a program schedule.

2. The program selection apparatus according to claim 1, wherein said means for specifying the watching time
regards time specifying information for specifying said watching time as a current time, and
changes said time specifying information from said current time to said watching time.

3. The program selection apparatus according to claim 2, wherein, to change said time specifying information from said current time to said watching time, said means for specifying the watching time uses any one speed among a plurality of predetermined speed.

4. The program selection apparatus according to claim 2, wherein, to change said time specifying information from said current time to said watching time, said means for specifying the watching time first uses any one speed among a plurality of predetermined speed, and then starts to use any other speed thereamong at some point during the change.

5. The program selection apparatus according to claim 1, wherein said means for specifying the watching time
regards time specifying information for specifying said watching time as a current time, and
changes, according to a broadcast start time for every program included in said EPG information, said time specifying information from said current time to said watching time.

6. A television receiver utilizing an EPG (Electrical Program Guide) comprising:
means for extracting EPG information from a video signal;
means for storing said EPG information;
means for specifying a watching time;
means for selecting information about a program relevant to said watching time from said EPG information, and then generating a program schedule;
means for displaying said program schedule; and
means for referring said program schedule for program selection.

7. A program selection method for selecting a program utilizing an EPG (Electronic Program Guide), the method comprising the steps of:
extracting EPG information from a video signal;
storing said EPG information;
specifying a watching time; and
selecting information about a program relevant to said watching time from said EPG information, and then generating a program schedule.

8. The program selection method according to claim 7, wherein said step of specifying the watching time comprises the steps of:
regarding time specifying information for specifying said watching time as a current time; and
changing said time specifying information from said current time to said watching time.

9. The program selection method according to claim 8, wherein, in said step of changing the time specifying information from said current time to said watching time, any one speed is used among a plurality of predetermined speed.

10. The program selection method according to claim 8, wherein, in said step of changing the time specifying information from said current time to said watching time, any one speed among a plurality of predetermined speed is first used, and then any other speed thereamong is started to use at some point during the change.

11. The program selection method according to claim 7, wherein said step of specifying the watching time comprises the steps of:
regarding time specifying information for specifying said watching time as a current time; and
changing, according to a broadcast start time for every program included in said EPG information, said time specifying information from said current time to said watching time.

12. A recording medium being stored a program for selecting a TV program utilizing an EPG (Electrical Program Guide) to be executed on a computer device, the program being for realizing an operational environment comprising the steps of:
extracting EPG information from a video signal:
storing said EPG information;
specifying a time for TV program watching; and
selecting information about a TV program relevant to said watching time from said EPG information, and generating a program schedule.

13. A method for supplying a program, over a communications circuit, for selecting a TV program utilizing an EPG (Electrical Program Guide) to be executed on a computer device, the program being for realizing an operational environment comprising the steps of:
extracting EPG information from a video signal:
storing said EPG information;
specifying a time for TV program watching; and
selecting information about a TV program relevant to said time for TV program watching from said EPG information.
